# EUROPEAN PATENT APPLICATION

(11) **EP 2 039 705 A1**
(43) Date of publication of application: **25.03.2009**
(21) Application number: 07768348.0
(22) Date of filing: 03.07.2007
(51) Int. Cl.: C08C 19/28, B60C 1/00, B60C 11/00, C08F 279/02

(54) **MODIFIED DIENE RUBBER AND RUBBER COMPOSITION CONTAINING THE SAME**

(30) Priority: 07.07.2006 JP 2006188216; 01.05.2007 JP 2007120930
(71) Applicant: The Yokohama Rubber Co., Ltd., Minato-ku Tokyo 105-8685 (JP)
(72) Inventor: KAWAZURA, Tetsuji, Hiratsuka-shi Kanagawa 254-8601 (JP); ASHIURA, Makoto, Hiratsuka-shi Kanagawa 254-8601 (JP)
(74) Representative: HOFFMANN EITLE
(86) International application number: PCT/JP2007/063624
(87) International publication number: WO 2008/004686

(57) **Abstract**

To modify a diene-based rubber whereby the dispersibility of silica and the abrasion resistance or heat buildup resistance are improved.

A modified diene-based rubber obtained by adding and reacting, to a diene-based rubber (A), a compound (B) having, in the molecule thereof, a nitroxide free radical stable at an ordinary temperature and in the presence of oxygen, a radical initiator (C) and a radical polymerizable monomer (D) having a functional group in the molecule thereof and a rubber composition and pneumatic tire containing the same.

## Description

### TECHNICAL FIELD

The present invention relates to a modified diene-based rubber, more specifically relates to a modified diene-based rubber obtained by adding a compound having, in the molecule thereof, a nitroxide radical stable at an ordinary temperature and in the presence of oxygen, a radical initiator and a radical polymerizable monomer to a diene-based rubber and reacting them in a non-solvent system so as to graft the radical polymerizable monomer onto the diene-based rubber, and relates to a rubber composition containing the same and a pneumatic tire using the same.

### BACKGROUND ART

In recent years, from the viewpoint of environmental protection, decrease in the rolling resistance of automobile tires has been strongly sought. To decrease the rolling resistance of automobile tires, the decrease in the high temperature tan δ of the tire tread rubber (e.g., the tan δ at 60°C, when measured at 20Hz) is strongly sought. To meet these demands, in recent years, use of silica together with a silane coupling agent for the tread rubber material has been widely practiced. However, silica is a particulate having a hydrophilic surface and is extremely difficult to finely disperse in hydrophobic rubber. If the silica is not uniformly dispersed in the rubber, not only is the characteristic of the silica, that is, the low tan δ, not sufficiently exhibited, but also there is the problem that the poorly dispersed agglomerates of silica become initiating points of, crack growth and, therefore, strength of the rubber material is decreased and the important characteristics of the tire, that is, the abrasion resistance etc. is decreased. To solve this problem, the technology has been developed of introducing alkoxysilyl groups having a high affinity with silica at the chain ends of SBR molecules obtained by a living anionic polymerization (e.g., see the following Non-Patent Document 1). However, such technology imparts a functional group at the time of polymerization of the rubber, and, therefore, there are numerous restrictions such as the need for improvement of the facilities of the polymerization plant, the solubility of the functional group imparting agent in the polymerization solvent and the effect on solvent recovery, and, furthermore, the technology only usable with a living polymerization.

Therefore, the inventors tried to develop the technology capable of introducing the desired functional groups to all diene-based rubbers, including natural rubber, in the mixing or kneading process. As a result, we proposed using a compound having, in the molecule thereof, a nitroxide radical stable at an ordinary temperature and in the presence of oxygen, for example, a TEMPO (i.e., a 2,2,6,6-tetramethyl-1-piperidinyloxy radical) or the derivative thereof and using a radical initiator to introduce functional groups into a polymer (e.g., see the following Patent Document 1 and Patent Document 2). However, polymers desirably have various functional groups depending upon their applications, and, therefore, various types of TEMPO derivatives have to be synthesized in advance and, therefore, there is a problem of the higher cost.

Furthermore, for example, the following Patent Document 3 discloses a method of reacting a nitroxide radical compound with a polymer in a solvent system, followed by adding a monomer for graft reaction. For the first stage reaction of making the nitroxide radical compound react with the polymer for grafting, use of a radical initiator having a high hydrogen withdrawing ability is essential. In the case of a solvent system, it is necessary to carry out the reaction at a temperature of the boiling point or less of the solvent, and, therefore, a high temperature reaction is not possible and the use of a radical initiator capable of being decomposed at a relatively low temperature is necessary, but such a radical initiator is an unstable compound and is liable to be rapidly decomposed due to an increase in the temperature, and, therefore, is dangerous and is difficult to handle. Further, a radical initiator withdraw hydrogen from the solvent, and, therefore, the reaction efficiency is decreased. Therefore, in Patent Document 3, a solvent in which all of the hydrogen is substituted with chlorine is used. However, such a solvent has a high environmental load. Furthermore, a solvent system has the problems that the reaction efficiency becomes lower than that of a non-solvent system, the rate of introduction of TEMPO sites in the first stage reaction becomes lower, and the rate of introduction of functional groups by the second stage graft reaction starting from those sites also becomes lower.
Non-Patent Document 1: A. Morikawa: Preprints of International Rubber Conference 2005, Yokohama, 26-S1-I-01(2005).
Patent Document 1: Japanese Patent Publication (A) No. 2004-182926
Patent Document 2: Japanese Patent Application No. 2004-108986
Patent Document 3: U.S. Patent No. 4581429

### DISCLOSURE OF INVENTION

An object of the present invention is to modify a diene-based rubber to, for example improve the dispersibility of silica (i.e., remarkably decrease the Payne effect) and improve the abrasion resistance and heat buildup resistance.

In accordance with the present invention, there are provided a modified diene-based rubber obtained by adding and reacting, to a diene-based rubber (A), a compound (B) having, in the molecule thereof, a nitroxide free radical stable at an ordinary temperature and in the presence of oxygen, a radical initiator (C) and a radical polymerizable monomer (D) having a functional group in the molecule thereof, a rubber composition containing the same and a pneumatic tire using the same.

According to the present invention, by adding, to a diene-based rubber (A), a TEMPO derivative or other compound (B) having, in the molecule thereof, a nitroxide radical stable at an ordinary temperature and in the presence of oxygen, a radical initiator (C) and a radical polymerizable monomer (D) having a functional group in the molecule thereof, it is possible to graft, on the diene-based rubber (A), the radical polymerizable monomer (D) to modify the diene-based rubber and provide, to the molecular chain of the diene-based rubber (A), a desired functional group, and therefore, it is possible to improve the dispersibility of silica and obtain a modified diene-based rubber superior in abrasion resistance, heat buildup resistance, etc.

Here, a "non-solvent system" indicates the state where rubber can, for example, be substantially mixed by a Banbury mixer or other internal mixer, kneader, roll mixer, single-screw extrusion mixer, twin-screw extrusion type mixer, or other general mixing device. Therefore, even a state where a small amount of a solvent is introduced to obtain a paste, if it can be mixed by a mixing device, is called a "non-solvent system".

### BEST MODE FOR CARRYING OUT THE INVENTION

The inventors, as shown schematically below, discovered that, by reacting, to a polyisoprene rubber or other diene-based rubber, an organic peroxide (PO) and hydroxy TEMPO (OH-TEMPO) to graft, onto the polyisoprene rubber, the OH-TEMPO, then reacting, thereto, for example a (meth)acrylate monomer having a trimethoxysilyl group in the molecule thereof or other radical polymerizable monomer (D) having a functional group in the molecule thereof, for example, a nitrogen-substituted internal mixer, a modified diene rubber comprised of a polyisoprene rubber or other diene-based rubber (A), to which the monomer (D) is grafted, is obtained, that by changing the functional groups of the monomer (D), it is possible to simply introduce various functional groups to a diene-based rubber, and that, compared with a non-modified rubber, which is not modified, a rubber composition mixed with silica etc. followed by cross-linking greatly decrease Payne effect (i.e., improvement in dispersion of silica) and superior in abrasion resistance, heat buildup resistance, etc. is obtained. Here, the "Payne effect" means a phenomenon of the dependency of the dynamic modulus on the amplitude. Usually, as the strain becomes larger, the storage modulus is decreased. The difference in the storage modulus, when the strain is small and when it is large, shows the extent of coagulation of the reinforcing agent particles in the rubber.

As the diene-based rubber capable of being modified according to the present invention, for example, natural rubber, polyisoprene rubber, various types of styrene-butadiene copolymer rubber, various types of polybutadiene rubber, various types of acrylonitrile-butadiene copolymer rubber, various types of hydrogenated acrylonitrile-butadiene copolymer rubber, various types of chloroprene rubber, various types of butyl rubber, etc. may be mentioned.

As the compound having, in the molecule thereof, a nitroxide free radical (-N-O·) stable at an ordinary temperature and in the presence of oxygen, usable in the present invention, the following compounds may be illustrated. Note that the addition amounts of these compounds are preferably, based upon 100 parts by weight of the diene-based rubber (A), 0.01 to 40 parts by weight, more preferably 0.05 to 30 parts by weight.

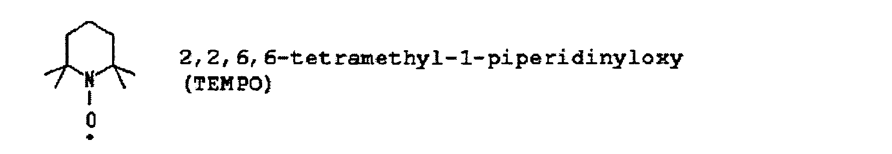

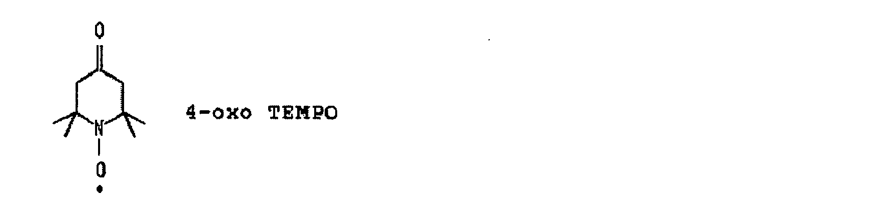

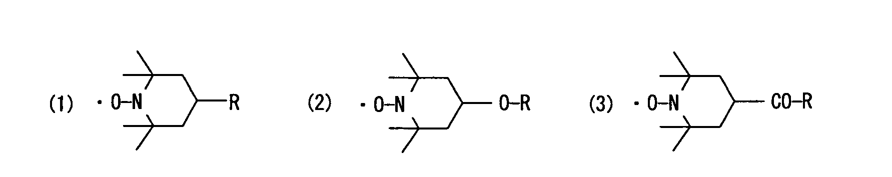

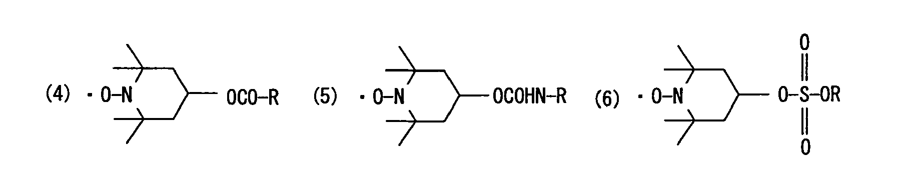

In the compounds having the formulas (1) to (6), R indicates a C1 to C30 alkyl group, allyl group, amino group, isocyanate group, hydroxyl group, thiol group, vinyl group, epoxy group, thiirane group, carboxyl group, carbonyl group-containing group (e.g., succinic anhydride, maleic anhydride, glutaric anhydride, phthalic anhydride, and other cyclic acid anhydrides), amide group, ester group, imide group, nitrile group, thiocyan group, C1 to C20 alkoxy group, silyl group, alkoxysilyl group, nitro group, or other functional group-containing organic group.

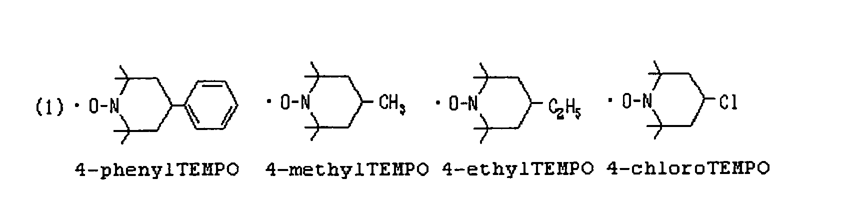

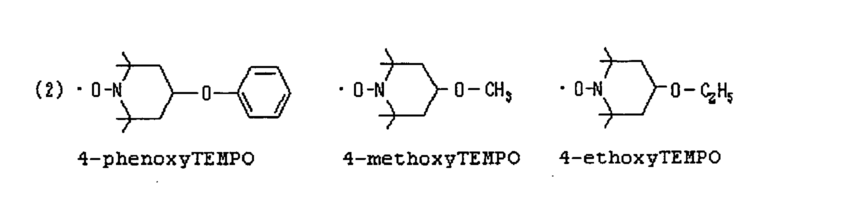

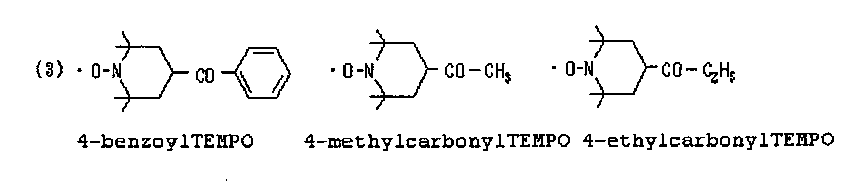

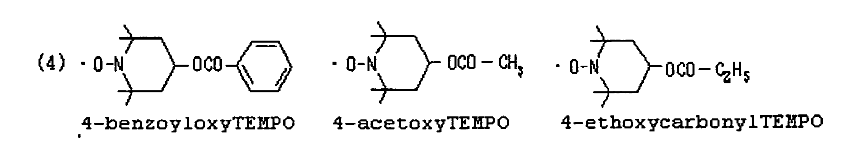

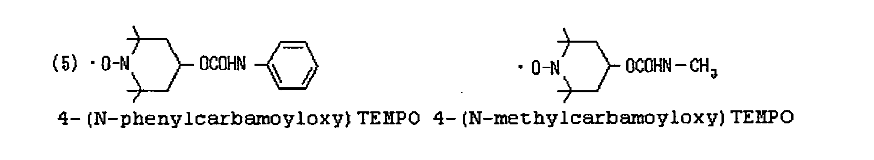

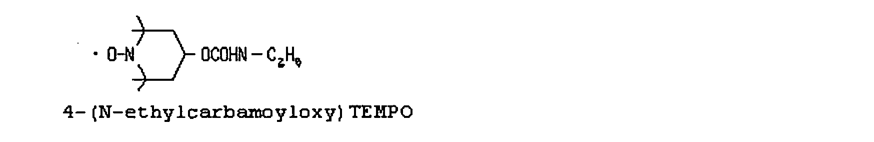

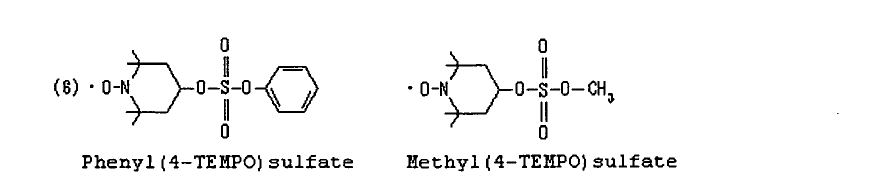

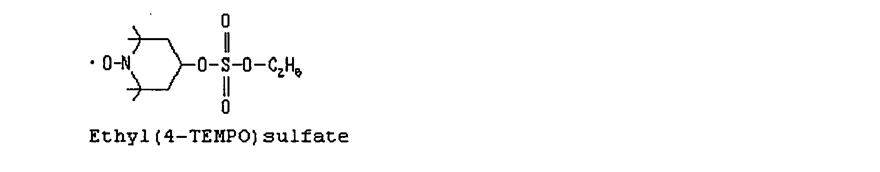

Other examples are given below: 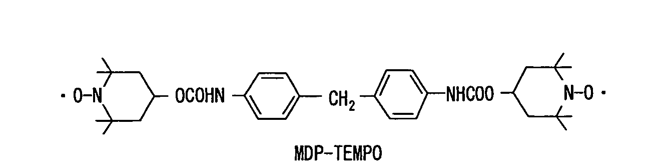 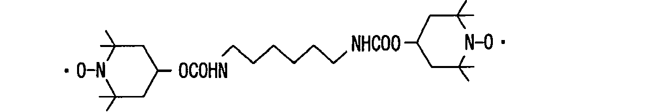 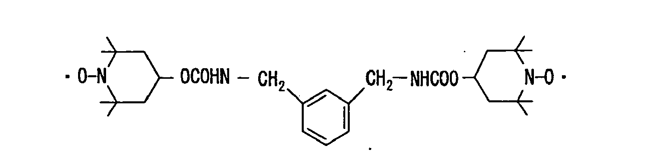 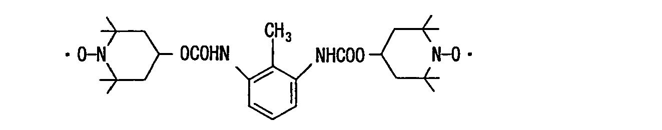 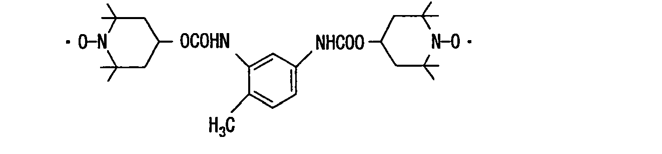 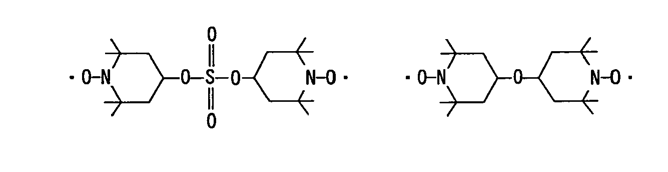 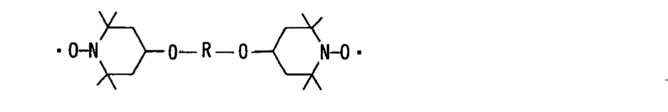 wherein R1 indicates a C1 to C30 alkyl group or phenyl group.

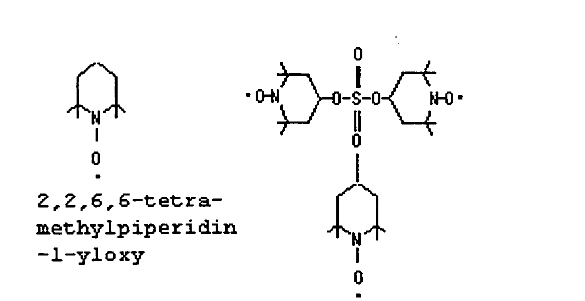

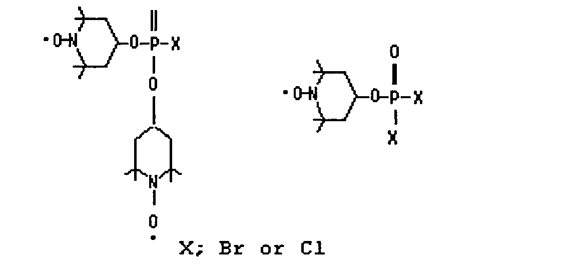

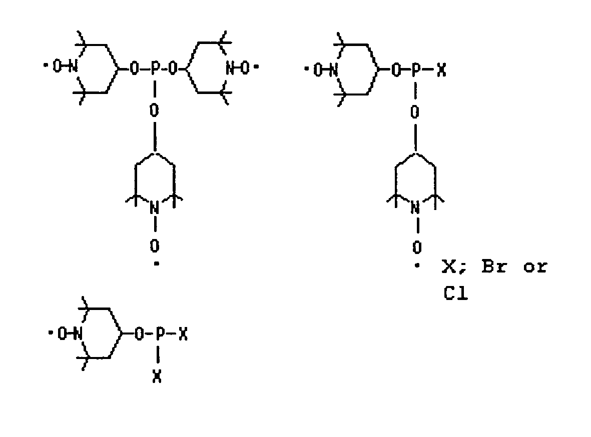

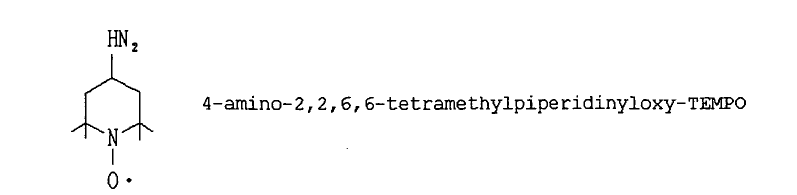

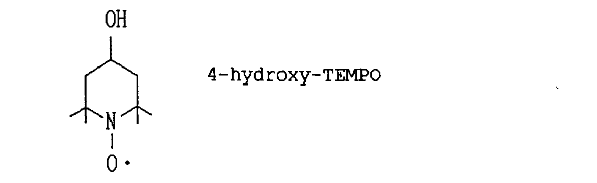

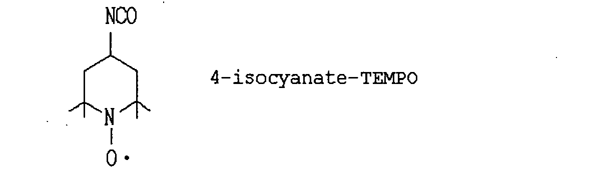

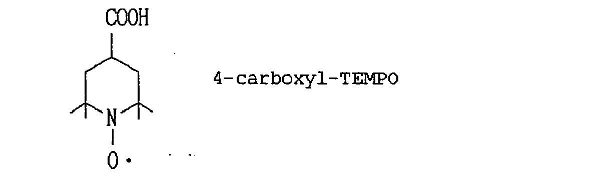

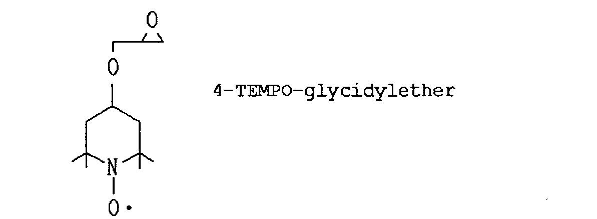

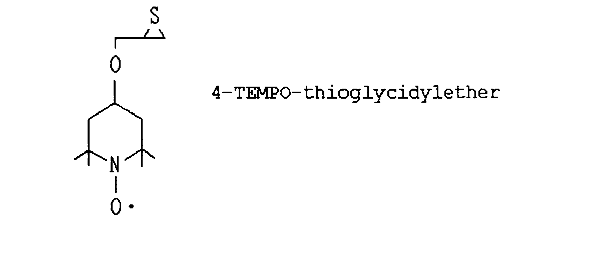

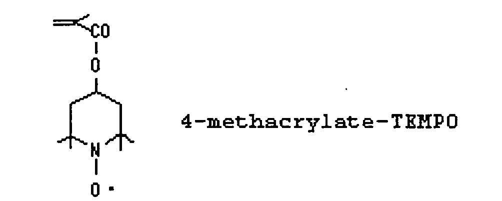

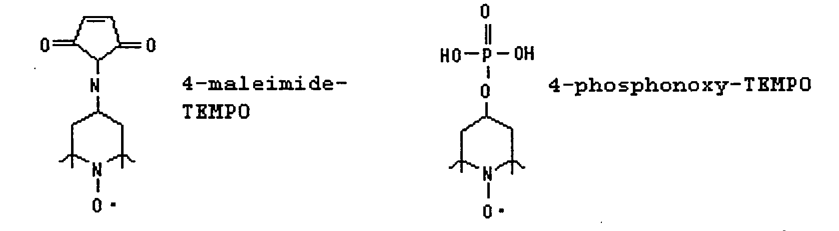

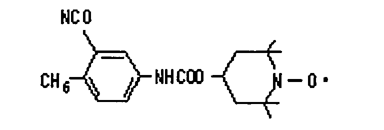

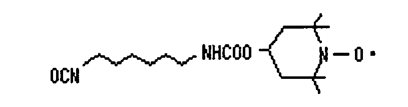

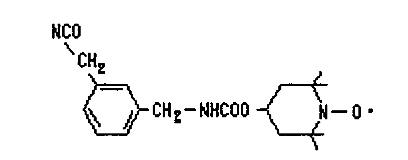

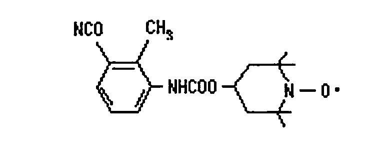

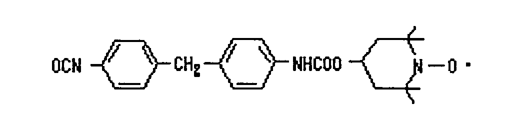

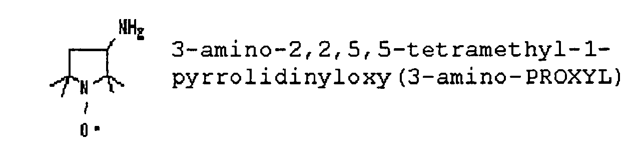

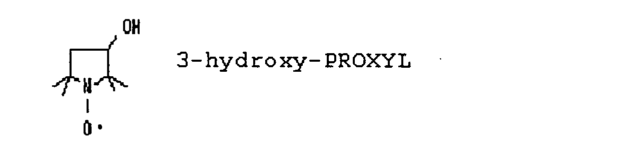

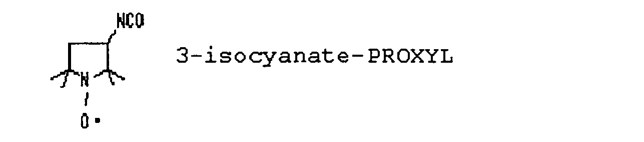

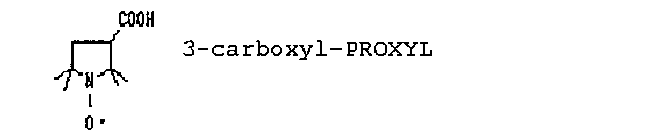

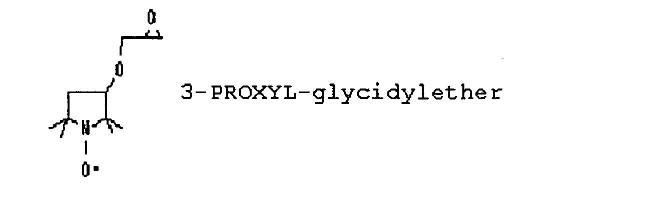

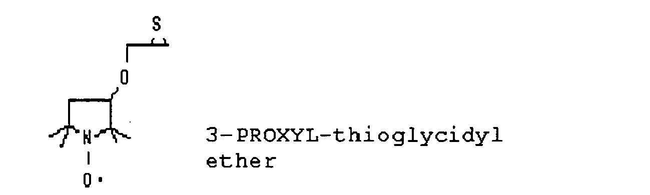

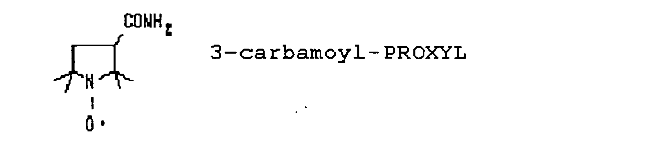

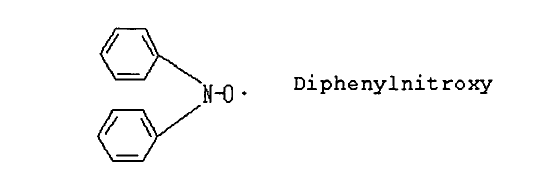

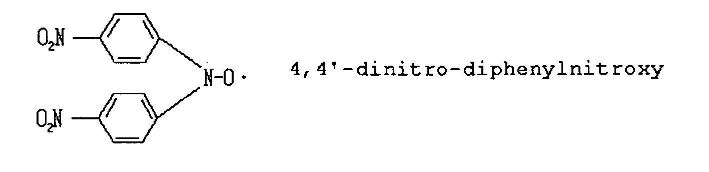

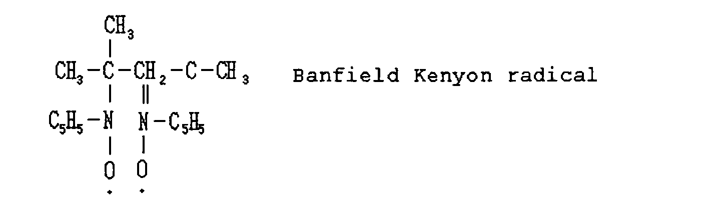

ON(SO₃K)₂ Fermi salt

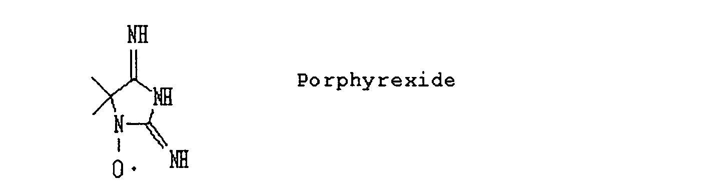

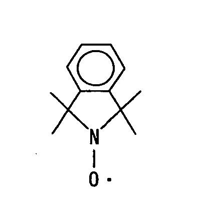

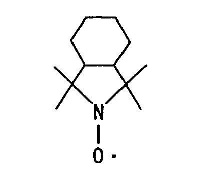

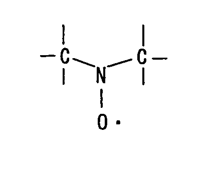

As the means for generating the carbon radicals in said polymers, the radical initiator (C) is added to the reaction system. As the radical initiator (C) usable in the present invention, for example, benzoyl peroxide (BPO), t-butyl peroxybenzoate (Z), dicumyl peroxide (DCP), t-butylcumyl peroxide (C), di-t-butyl peroxide (D), 2,5-dimethyl-2,5-di-t-butyl peroxyhexane (2,5B), 2,5-dimethyl-2,5-di-t-butyl peroxy-3-hexyne (Hexyne-3), 2,4-dichlorobenzoyl peroxide (DC-BPO), di-t-butyl peroxydi-isopropylbenzene (P), 1,1-bis(t-butylperoxy)-3,3,5-trimethyl cyclohexane (3M), n-butyl-4,4-bis(t-butylperoxy)valerate, 2,2-bis(t-butylperoxy)butane, and other organic peroxides and azodicarbonamide (ADCA), azobis-isobutyronitrile (AIBN), 2,2'-azobis-(2-amidinopropane)dihydrochloride, dimethyl-2,2'-azobis(isobutyrate), azobis-cyan valeric acid (ACVA), 1,1'-azobis-(cyclohexane-1-carbonitrile) (ACHN), 2,2'-azobis-(2,4-dimethylvaleronitrile) (ADVN), azobismethylbutyronitrile (AMBN), 2,2'-azobis-(4-methoxy-2,4-dimethylvaleronitrile), or other radical generating agents may be mentioned. These can be added to a reaction system of a polymer and a compound having such a nitroxide radical (mixture system and contact system) to generate carbon radicals in the polymer. The addition amount of the radical initiator (C) is not particularly limited, but is preferably, in terms of the molecules of decomposition-generated radical, 0.0001 to 0.1 mol%, based upon the diene-based rubber (A), more preferably 0.0002 to 0.08 mol%. If this addition amount is too small, the amount of the reaction of the compound having the nitroxide radical to the diene-based rubber becomes insufficient, and, therefore, this is not preferable, while conversely if too large, the cross-linking of the diene-based rubber progresses and the amount of gelation increases, and, therefore, this is also not preferable. Note that "in terms of the molecules of the decomposition-generated radical", means that amount of the initiator is calculated using a value calculated by dividing the molecular weight of the radical initiator with the number of functions (e.g., dicumyl peroxide decomposes and generates two molecules having oxygen radicals, so the number of functions is 2).

As the radical polymerizable monomer (D) usable in the present invention, a monomer having at least one type of functional group selected from functional groups having reactivity or affinity with the surfaces of the silica grains, for example, a hydroxyl group, primary amino group, secondary amino group, tertiary amino group, carboxyl group, carbonyl group, alkoxysilyl group, epoxy group, isocyanate group, alkoxysilyl group, and an organic group having siloxane bonds, in particular a monomer including an electron withdrawing group (vinyl group, aryl group, carbonyl group, carboxyl group, cyano group, nitro group, etc.) may be suitably used.

These functional groups are introduced into the diene-based rubber (A) by modification. As specific polymerizable monomers, for example:
styrene, α-methylstyrene, p-methylstyrene, m-methoxystyrene, o-chlorostyrene, N,N-dimethyl-p-aminomethylstyrene, p-acetoxystyrene, p-t-butoxystyrene, divinylbenzene, or other aromatic vinyl compound derivatives;
methyl(meth)acrylate (here, the expression "methyl (meth)acrylate" includes both methyl methacrylate and methyl acrylate. Below, the same for different compounds as well), ethyl(meth)acrylate, n-butyl(meth)acrylate, t-butyl(meth)acrylate, 2-ethylhexyl(meth)acrylate, stearyl (meth)acrylate, or other alkyl(meth)acrylates;
methyl crotonate, ethyl crotonate, methyl cinnamate, ethyl cinnamate, or other unsaturated monocarboxylic acid esters;
trifluoroethyl (meth)acrylate, pentafluoropropyl (meth)acrylate, heptafluorobutyl (meth)acrylate, or other fluoroalkyl (meth)acrylates;
trimethylsiloxanyldimethylsilylpropyl (meth)acrylate, tris(trimethylsiloxanyl)silylpropyl (meth)acrylate, di(meth)acroylpropyldimethylsilyl ether, or other siloxanyl compounds;
3-(trimethoxysilyl)propyl (meth)acrylate, 3-(triethoxysilyl)propyl (meth)acrylate, 3-(dimethoxysilyl)propyl (meth)acrylate, 3-(diethoxysilyl)propyl (meth)acrylate, vinyltriethoxysilane, vinyltrimethoxysilane, or other alkoxysilane compounds;
ethyleneglycol, 1,2-propanediol, 1,3-propanediol, 1,6-hexanediol, or other alkylglycol mono- or di-(meth)acrylates;
trimethylolpropane tri(meth)acrylate, polyethyleneglycol di(meth)acrylate, 1,6-hexanediol di(meth)acrylate, tetramethylolmethane tri(meth)acrylate, tetramethylolmethane tetra(meth)acrylate, polypropyleneglycol di(meth)acrylate, tris(2-hydroxyethyl)isocyanulate tri(meth)acrylate, ethoxylated trimethylolpropane tri(meth)acrylate, pentaerythritol tri(meth)acrylate, ethoxylated trimethylolpropane tri(meth)acrylate, propoxylated trimethylolpropane (meth)acrylate, propoxylated glyceryl (meth)acrylate, pentaerythritol tetra(meth)acrylate, ditrimethylolpropane tetra(meth)acrylate, dipentaerythritol penta(meth)acrylate, ethoxylated pentaerythritol tetra(meth)acrylate, polysiloxane di(meth)acrylate, various types of urethane (meth)acrylates, various types of metal (meth)acrylates, or other polyfunctional (meth)acrylates;
2-methoxyethyl (meth)acrylate, 2-ethoxyethyl (meth) acrylate, 3-ethoxypropyl (meth)acrylate, or other alkoxyalkyl (meth)acrylates; cyanoethyl(meth)acrylate, cyanopropyl (meth)acrylate, or other cyanoalkyl (meth)acrylates;
acrylonitrile, methacrylonitrile, or other cyano compounds;
N,N-dimethylaminoethyl(meth)acrylate, N-t-butyl aminoethyl(meth)acrylate, or other nitrogen-containing (meth)acrylates;
(meth)acrylamide, N,N-dimethyl(meth)acrylamide, N-isopropyl(meth)acrylamide, or other (meth)acrylamides;
2-hydroxyethyl(meth)acrylate, 2-hydroxypropyl (meth)acrylate, or other hydroxyalkyl(meth)acrylates;
2-hydroxyethyl crotonate, 2-hydroxypropyl crotonate, 2-hydroxypropyl cinnamate, or other unsaturated carboxylic acid hydroxyalkyl esters;
(meth)allyl alcohols or other unsaturated alcohols;
(meth)acrylic acid, crotonic acid, cinnamic acid, or other unsaturated (mono)carboxylic acids;
(anhydrous) maleic acid, fumaric acid, (anhydrous) itaconic acid, citraconic acid, or other unsaturated polycarboxylic acids (anhydrides); and mono- and diesters of the same;
2-isocyanate ethyl(meth)acrylate or other isocyanate compounds; allylglycidyl ether, glycidyl (meth)acrylate, or other epoxy group-containing unsaturated compounds, and thiirane group-containing unsaturated compounds guiding these to thiirane, and
N,N'-phenylene dimaleimide, bismaleimide diphenylmethane, triallyl isocyanulate, etc. may be mentioned.

The addition amount of the polymerizable monomer (D) is not particularly limited, it is preferable to add for the reaction, based upon 100 parts by weight of the diene-based rubber (A), 0.01 to 100 parts by weight, more preferably 0.5 to 15 parts by weight, still more preferably 0.1 to 30 parts by weight.

The ratio of addition amount of the compound (B) having a nitroxide radical in the molecule thereof and the radical polymerizable monomer (D) is not particularly limited, but is preferably (D)/(B)=0.005 to 100 (molar ratio). If this ratio is smaller than 0.005, the effect of introduction of functional groups is liable not to be exhibited, while conversely if this ratio is larger than 100, a homopolymer is liable to be formed, and, therefore, this is not preferable. Furthermore, it is sufficient that about 1 molecule of the component (D) is introduced to one site of the component (B) introduced into the polymer. Further, from the viewpoint of cost, (D)/(B)=0.005 to 1 (molar ratio) is more preferable.

The method for mixing and reacting the components (A) to (D) according to the present invention is not particularly limited so long as the mixing is carried out in a non-solvent system, but it is possible to first react the component (A) to the component (C), then react the component (D) for more effective modification. This process can be continuously or discontinuously carried out. This modification can be carried out, for example, using an internal mixer (Banbury mixer, kneader, or Brabender), a twin-screw kneader, single-screw kneader, roll, etc. These reactions may be inhibited in the presence of oxygen, but preferably are performed in the state with a low oxygen concentration. Further, mixing in a mixer in which the inside thereof is substituted with nitrogen gas or another inert gas is more preferable.

The modified diene-based rubber according to the present invention may have carbon black, silica, or another reinforcing filler, a vulcanization or cross-linking agent, a vulcanization or cross-linking accelerator, various types of oils, an antioxidant, a plasticizer, or other conventional various types of additives to obtain a rubber composition and the formulation kneaded and vulcanized by a general method to obtain a composition for vulcanization or cross-linking for use as a pneumatic tire etc. The amounts of these additives also can be made the conventional amounts so long as not running counter to the object of the present invention.

The rubber composition of the present invention contains the modified diene-based rubber in an amount, based upon 100 parts by weight of the total rubber ingredients, preferably 5 parts by weight or more, more preferably 10 to 100 parts by weight. If the compounding amount is too small, the desired effect of improvement is liable not to be obtained. As the other rubber ingredients, natural rubber, various types of polyisoprene rubber, various types of polybutadiene rubber, various types of styrene-butadiene copolymer rubber, various types of butyl rubber, isomonoolefin and paramethylstyrene copolymers, and their halides etc. alone or in any combinations of two or more types may be mentioned.

The rubber composition of the present invention contains, based upon 100 parts by weight of the total rubber ingredients, preferably 5 to 300 parts by weight, more preferably 20 to 100 parts by weight of a reinforcing filler. As the reinforcing filler, any silica, carbon black, etc. may be compounded into a rubber composition, in particular a tire use rubber composition, may be mentioned. These may be compounded alone or in any combinations thereof. The silica usable in the present invention is not particularly limited. Any silica capable of being compounded in a rubber composition may be used. The rubber composition of the present invention preferably includes 10 to 100% by weight of a reinforcing filler.

The rubber composition of the present invention may preferably contain, based upon 100 parts by weight of the total rubber components, a cross-linking agent (specifically, sulfur, organic peroxide, etc.) in 0.05 to 15 parts by weight, more preferably 0.5 to 10 parts by weight.

### EXAMPLES

Examples will now be used to further explain the present invention, but the scope of the present invention is by no means limited to these Examples. Note that in the Examples and Comparative Examples, the following materials were used.

### Production Example 1: Production of DHK-2F

Synthetic polyisoprene rubber (Nipol IR2200 made by Nippon Zeon) in 350 g (5.14 moles), hydroxyl TEMPO (OH TEMPO)(made by NOF Corporation) in 8.86 g (0.0514 mole), and ditertiary butyl peroxide (Perbutyl D made by NOF Corporation) in 0.378 g (in terms of the molecules of decomposition-generated radical: 5.16×10⁻³ moles, below the number of moles and mol% of the radical initiator all being shown by this way) were mixed in a 600 cc internal mixer set to 60°C for 5 minutes to cause them to disperse (i.e., premixing). This premixed rubber was mixed in an internal mixer set to 100°C in a nitrogen atmosphere for 10 minutes and discharged. The temperature at the time of the end of the mixing was 185°C. A part of this rubber was sampled and the hydroxy TEMPO or peroxide residue not bonded with the rubber molecule was removed by dissolving the rubber in toluene, followed by dropwise added into methanol to be coagulated and recovered. This operation was carried out three times, then 1H-NMR measurement was carried out to calculate the grafted amount of hydroxy TEMPO. The rate of introduction of hydroxyl TEMPO was about 0.3 mol%.

This modified rubber was weighed to 310 g and mixed with methacryloxypropyl trimethoxysilane (i.e., monomer A) (KBM-503 made by Shin-Etsu Chemical) in 11.4 g in an internal mixer under a nitrogen atmosphere again at a temperature of about 160°C for reaction for about 15 minutes to obtain the desired modified rubber. The rubber was purified in the same way as above and measured by 1H-NMR. The estimated grafted methacryloxypropyl trimethoxysilane was about 0.3 mol%.

### Production Example 2: Production of DHK-3F

The synthetic polyisoprene rubber in 350 g (5.14 moles), the hydroxy TEMPO 8.86 g (0.0514 mole), and the ditertiary butyl peroxide in 0.184 g (2.517×10⁻³ moles) were mixed in a 600 cc internal mixer set to 60°C for 5 minutes to be dispersed (premixing). This premixed rubber was mixed in an internal mixer set to 100°C in a nitrogen atmosphere for 10 minutes and discharged. The temperature at the time of the end of the mixing was 185°C. A part of this rubber was sampled and the hydroxy TEMPO or peroxide residue not bonded with the rubber molecule was removed by dissolving the rubber in toluene, followed by dropwise adding into methanol to be coagulated and recovered. This operation was carried out three times, then 1H-NMR measurement was carried out to calculate the grafted amount of hydroxy TEMPO. The rate of introduction of hydroxyl TEMPO was about 0.3 mol%.

This modified rubber was weighed to 310 g and mixed together with the methacryloxypropyl trimethoxysilane in 11.4 g in an internal mixer under a nitrogen atmosphere again at a temperature of about 160°C for reaction for about 15 minutes to obtain the desired modified rubber. The rubber was purified in the same way as above and measured by 1H-NMR. The estimated methacryloxypropyl trimethoxysilane was about 0.3 mol%.

### Production Example 3: Production of DHK-4F

The synthetic polyisoprene rubber in 350 g (5.14 moles), the hydroxy TEMPO in 8.86 g (0.0514 mole) and di(2-tertiary butyl peroxyisopropyl)benzene (Perbutyl P made by NOF Corporation) in 0.213 g (2.517×10⁻³ moles) were mixed in a 600 cc internal mixer set to 60°C for 5 minutes to be dispersed (premixing). This premixed rubber was mixed in an internal mixer set to 100°C in a nitrogen atmosphere for 10 minutes and discharged. The temperature at the time of the end of the mixing was 185°C. A part of this rubber was sampled and the hydroxy TEMPO or peroxide residue not bonded with the rubber molecule was removed by dissolving the rubber in toluene, followed by dropwise added into methanol to be coagulated and recovered. This operation was carried out three times, then 1H-NMR measurement was carried out to calculate the grafted amount of hydroxy TEMPO. The rate of introduction of hydroxyl TEMPO was about 0.3 mol%.

This modified rubber was weighed to 310 g and mixed with acryloxypropyl trimethoxysilane (monomer B) (KBM-5103 made by Shin-Etsu Chemical) in 11.4 g in an internal mixer under a nitrogen atmosphere again at a temperature of about 160°C for reaction for about 15 minutes to obtain the desired modified rubber. This was purified in the same way as the above and measured by infrared spectrometry (ATR method), whereby it was confirmed that acryloxypropyl trimethoxysilane was grafted.

### Production Example 4: Production of DHK-6F

The synthetic polyisoprene rubber in 350 g (5.14 moles), the hydroxyl TEMPO in 8.86 g (0.0514 mole) and the di(2-tertiary butyl peroxyisopropyl)benzene in 0.106 g (1.253×10⁻³ moles) were mixed in a 600 cc internal mixer set to 60°C for 5 minutes to be dispersed (premixing). This premixed rubber was mixed in an internal mixer set to 100°C in a nitrogen atmosphere for 10 minutes and discharged. The temperature at the time of the end of the mixing was 185°C. A part of this rubber was sampled and the hydroxy TEMPO or peroxide residue not bonded with the rubber molecule was removed by dissolving the rubber in toluene, followed by dropwise added into methanol to be coagulated and recovered. This operation was carried out three times, then 1H-NMR measurement was carried out to calculate the grafted amount of hydroxy TEMPO. The rate of introduction of the hydroxyl TEMPO was about 0.3 mol%.

This modified rubber was weighed to 310 g and mixed together with the acryloxypropyl trimethoxysilane (monomer B) in 11.4 g in an internal mixer under a nitrogen atmosphere again at a temperature of about 160°C for reaction for about 15 minutes to obtain the desired modified rubber. This was purified in the same way as the above and measured by infrared spectrometry (ATR method) whereby it was confirmed that acryloxypropyl trimethoxysilane was grafted.

### Production Example 5: Production of DHK-AF

The synthetic polyisoprene rubber in 350 g (5.14 moles), the hydroxy TEMPO in 8.86 g (0.0514 mole) and the di(2-tertiary butyl peroxyisopropyl)benzene in 0.053 g (6.263×10⁻⁴ moles) were mixed in a 600 cc internal mixer set to 60°C for 5 minutes to be dispersed (premixing). This premixed rubber was mixed in an internal mixer set to 100°C in a nitrogen atmosphere for 10 minutes and discharged. The temperature at the time of the end of the mixing was 185°C. A part of this rubber was sampled and the hydroxy TEMPO or peroxide residue not bonded with the rubber molecule was removed by dissolving the rubber in toluene, followed by dropwise added into methanol to be coagulated and recovered. This operation was carried out three times, then 1H-NMR measurement was carried out to calculate the grafted amount of hydroxy TEMPO. The rate of introduction of hydroxyl TEMPO was about 0.2 mol%.

This modified rubber was weighed to 310 g and mixed together with the acryloxypropyl trimethoxysilane (monomer B) in 11.4 g in an internal mixer under a nitrogen atmosphere again at a temperature of about 160°C for reaction for about 15 minutes to obtain the desired modified rubber. This was purified in the same way as the above and measured by infrared spectrometry (ATR method) whereby it was confirmed that acryloxypropyl trimethoxysilane was grafted.

### Production Example 6: Production of DHK-BF

The synthetic polyisoprene rubber in 350 g (5.14 moles), the hydroxyl TEMPO in 8.86 g (0.0514 mole) and the di(2-tertiary butyl peroxyisopropyl)benzene in 0.01 g (1.182×10⁻⁴ moles) were mixed in a 600 cc internal mixer set to 60°C for 5 minutes to be dispersed (premixing). This premixed rubber was mixed in an internal mixer set to 100°C in a nitrogen atmosphere for 10 minutes and discharged. The temperature at the time of the end of the mixing was 185°C. A part of this rubber was sampled and the hydroxy TEMPO or peroxide residue not bonded with the rubber molecule was removed by dissolving the rubber in toluene, followed by dropwise added into methanol to be coagulated and recovered. This operation was carried out three times, then 1H-NMR measurement was carried out to calculate the grafted amount of hydroxy TEMPO. The rate of introduction of hydroxyl TEMPO was about 0.2 mol%.

This modified rubber was weighed to 310 g and mixed together with the acryloxypropyl trimethoxysilane (monomer B) in 11.4 g in an internal mixer under a nitrogen atmosphere again at a temperature of about 160°C for reaction for about 15 minutes to obtain the desired modified rubber. This was purified in the same way as the above and measured by infrared spectrometry (ATR method) whereby it was confirmed that acryloxypropyl trimethoxysilane was grafted.

### Production Example 7: Production of DHK-CF

The synthetic polyisoprene rubber in 350 g (5.14 moles), the hydroxy TEMPO in 8.86 g (0.0514 mole) and the di(2-tertiary butyl peroxyisopropyl)benzene in 0.001 g (1.182×10⁻⁵ moles) were mixed in a 600 cc internal mixer set to 60°C for 5 minutes to be dispersed (premixing). This premixed rubber was mixed in an internal mixer set to 100°C in a nitrogen atmosphere for 10 minutes and discharged. The temperature at the time of the end of the mixing was 185°C. A part of this rubber was sampled and the hydroxy TEMPO or peroxide residue not bonded with the rubber molecule was removed by dissolving the rubber in toluene, followed by dropwise added into methanol to be coagulated and recovered. This operation was carried out three times, then 1H-NMR measurement was carried out to calculate the grafted amount of hydroxy TEMPO. The rate of introduction of hydroxyl TEMPO was about 0.2 mol%.

This modified rubber was weighed to 310 g and mixed together with the acryloxypropyl trimethoxysilane (monomer B)in an amount of 11.4 g in an internal mixer under a nitrogen atmosphere again at a temperature of about 160°C for reaction for about 15 minutes to obtain the desired modified rubber. This was purified in the same way as the above and measured by infrared spectrometry (ATR method), whereby it was confirmed that acryloxypropyl trimethoxysilane was grafted.

### Examples 1 to 2 and Comparative Examples 1 to 2

### Preparation of Sample

In each of the formulations shown in Table I, the ingredients other than the vulcanization accelerator and sulfur were mixed in a 0.6 liter internal mixer set to a temperature of 120°C at a rotor speed of 50 rpm for 12 minutes. The batch was discharged when reaching 150°C, then the vulcanization accelerator and sulfur were added thereto and the resultant mixture was mixed on an open roll to obtain a rubber composition.

Next, the rubber composition thus obtained was press vulcanized in a 15×15×0.2 cm mold and a Lambourn abrasion test mold at 160°C for 20 minutes to prepare a vulcanized rubber sheet and the test methods shown below were used to measure the physical properties of the vulcanized rubber. The results are shown in Table I.

### Test Methods for Evaluation of Rubber Physical Properties

### Tensile test: Measured based on JIS K6251 using JIS No. 3 dumbbell sample

Viscoelasticity test: Measured using viscoelasticity spectrometer made by Toyo Seiki Seisakusho at an initial strain of 10%, an amplitude of ±2%, and a frequency of 20Hz.

Lambourn abrasion: Measured using Lambourn abrasion tester according to a JIS K6264 method under conditions of a load of 1.5 kg and a slip rate of 40%. Expressed indexed to (abrasion of Comparative Example 1)×100/(abrasion of sample) as 100. The larger the index value, the better the abrasion resistance.

**Table I**

| | | Comp. | Comp. | Ex. 1 | Ex. 2 |
|---|---|---|---|---|---|
| | | Ex. 1 | Ex. 2 | | |
| Formulation (parts by weight) | | | | | |
| Natural rubber | | 100 | - | - | - |
| Polyisoprene rubber | | - | 100 | - | - |
| DHK-2F | | - | - | 100 | - |
| DHK-3F | | - | - | - | 100 |
| Silica | | 70 | 70 | 70 | 70 |
| Zinc oxide | | 3 | 3 | 3 | 3 |
| Stearic acid | | 1 | 1 | 1 | 1 |
| Diethyleneglycol | | 3 | 3 | 3 | 3 |
| Antioxidant 6PPD | | 2 | 2 | 2 | 2 |
| Paraffin wax | | 1 | 1 | 1 | 1 |
| Silane coupling agent TESPT | | 5.6 | 5.6 | 5.6 | 5.6 |
| Processing oil | | 12 | 12 | 12 | 12 |
| Sulfur | | 2 | 2 | 2 | 2 |
| Vulcanization accelerator CBS | | 2 | 2 | 2 | 2 |
| Vulcanization accelerator DPG | | 0.5 | 0.5 | 0.5 | 0.5 |

| Evaluated physical properties | | | | | |
|---|---|---|---|---|---|
| Tensile test | | | | | |
| Test temp. (room | M₁₀₀ | 3.91 | 3.67 | 4.58 | 4.67 |
| temp.) | M₃₀₀ | 16.03 | 15.26 | 19.62 | 20.26 |
| Shape (JIS3) | T_{B} | 25.61 | 27.17 | 21.52 | 21.16 |
| Speed (500 mm/min) | E_{B} | 484.5 | 516.9 | 329.4 | 313.4 |

| Viscoelasticity test | | | | | |
|---|---|---|---|---|---|
| Dynamic strain | Temp. [0°C] | | | | |
| (2±%) | E' [MPa] | 13.88 | 10.85 | 11.11 | 10.58 |
| Frequency (20Hz) | E" [MPa] | 4.16 | 3.06 | 3.11 | 2.89 |
| Initial strain | tan δ | 0.300 | 0.282 | 0.280 | 0.273 |
| (2000µm) | Temp. [20°C] | | | | |
| | E' [MPa] | 10.74 | 8.53 | 8.19 | 7.77 |
| | E" [MPa] | 2.64 | 1.9 | 1.87 | 1.71 |
| | tan δ | 0.246 | 0.223 | 0.228 | 0.220 |
| | Temp. [60°C] | | | | |
| | E' [MPa] | 7.65 | 6.32 | 5.62 | 5.37 |
| | E" [MPa] | 1.28 | 0.88 | 0.75 | 0.67 |
| | tan δ | 0.167 | 0.140 | 0.134 | 0.125 |

| Lambourn abrasion test | | | | | |
|---|---|---|---|---|---|
| | Index | 100 | 100 | 102 | 104 |

| | | | | | |
|---|---|---|---|---|---|
| Notes of Table I Natural rubber: STR20 Polyisoprene rubber: Nipol IR2200 made by Nippon Zeon DHK-2F: See above Production Example 1 DHK-3F: See above Production Example 2 Silica: Nipsil VN3 made by Nippon Silica Industrial Zinc oxide: No. 3 Zinc White made by Seido Chemical Industry Stearic acid: Industrial Use Stearic Acid made by Asahi Denka Diethyleneglycol: Diethyleneglycol made by Maruzen Chemical Antioxidant 6PPD: Nocrac 6C made by Ouchi Shinko Chemical Industrial Paraffin wax: Sannoc N made by Ouchi Shinko Chemical Industrial Silane coupling agent TESPT: Si69 made by Degussa Processing oil: Diana Process AH-58 made by Idemitsu Kosan Sulfur: Powder sulfur made by Tsurumi Chemical Vulcanization accelerator CBS: Noccelar CZ made by Ouchi Shinko Chemical Industrial Vulcanization accelerator DPG: Noccelar D made by Ouchi Shinko Chemical Industrial | | | | | |

### Examples 3 to 7 and Comparative Example 3 Preparation of Sample

In each of the formulations shown in Table II, the ingredients other than the vulcanization accelerator and sulfur were mixed in a 0.6 liter internal mixer set to a temperature of 120°C at a rotor speed of 50 rpm for 12 minutes. The batch was discharged when reaching 150°C, then the vulcanization accelerator and sulfur were added thereto and the resultant mixture was mixed on an open roll to obtain a rubber composition.

Next, the rubber composition obtained was press vulcanized in a 15×15×0.2 cm mold and a Lambourn abrasion test mold at 160°C for 15 minutes to prepare a vulcanized rubber sheet and the above test method was used to measure the physical properties of the vulcanized rubber. The results are shown in Table II. Note that the Lupke rebound elasticity was determined by the following method:
Lupke rebound elasticity: Measured according to JIS K 6255.

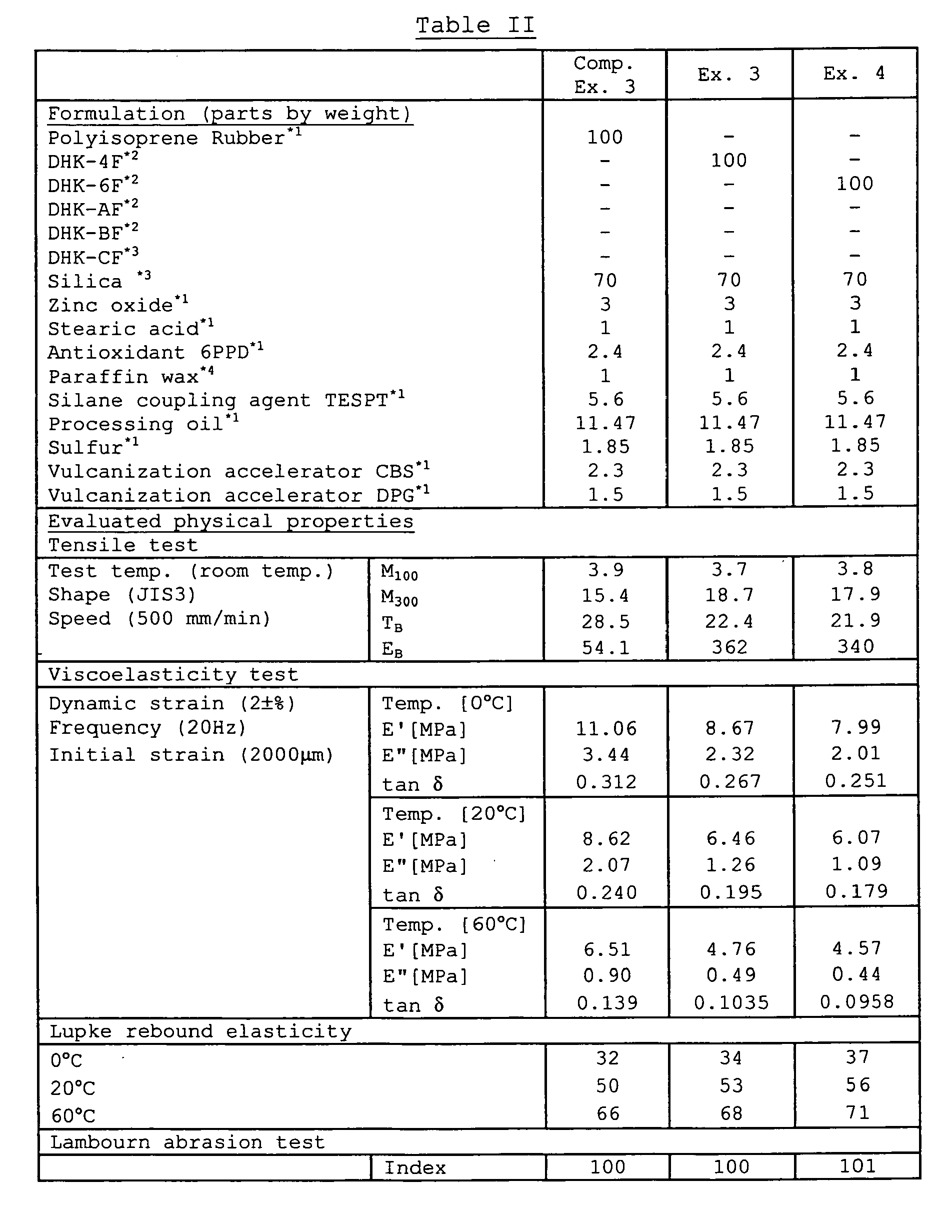

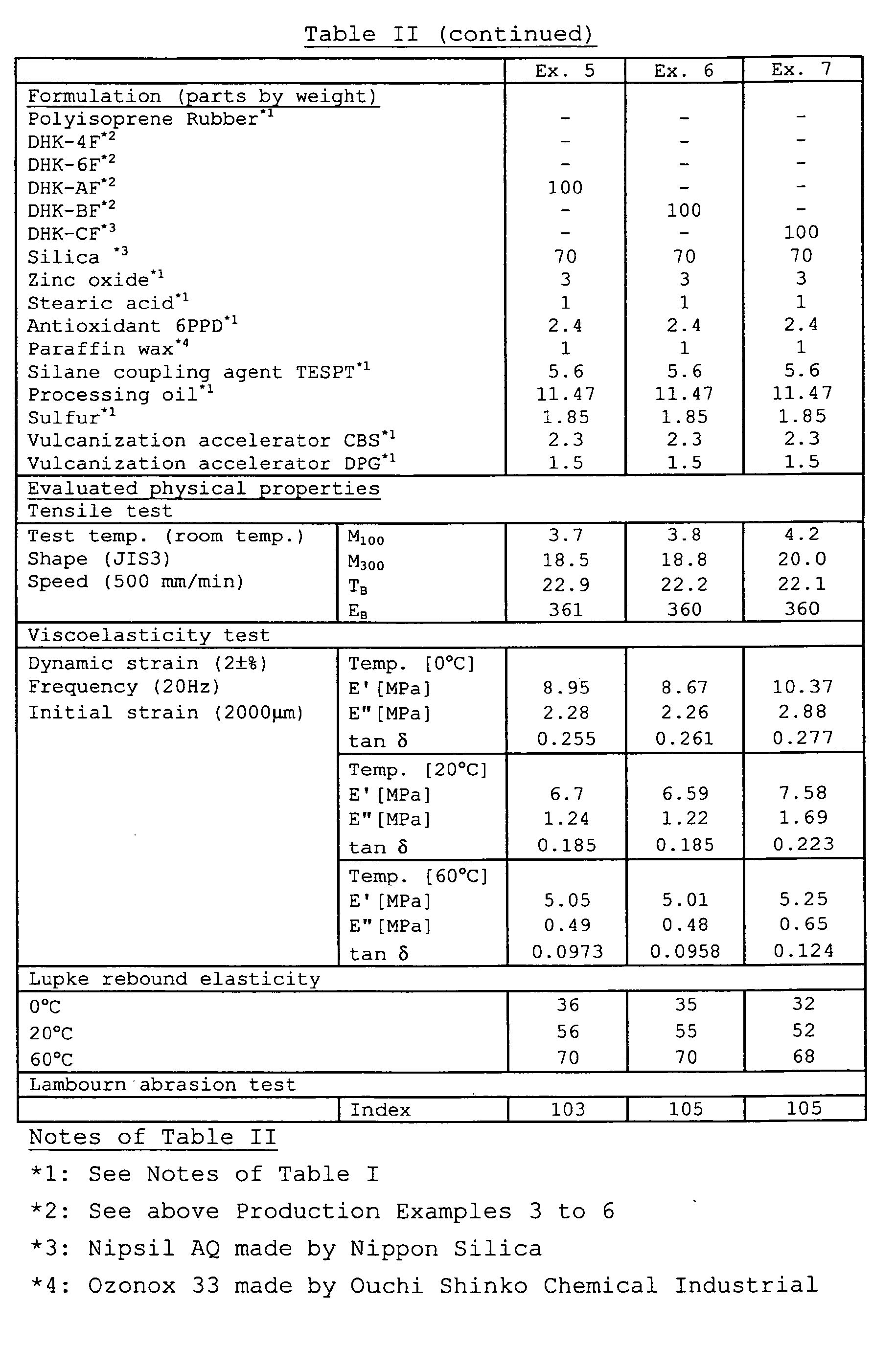

### Production Example 8: Production of NHK-8F

Natural rubber (STR20) in 350 g, hydroxy TEMPO (OH-TEMPO) (made by NOF Corporation) in 8.86 g, and di(2-t-butyl peroxyisopropyl)benzene (perbutyl P made by NOF Corporation) in 0.1065 g were mixed in a 600 cc internal mixer set to 60°C for 5 minutes to be dispersed (premixing). This premixed rubber was mixed in an internal mixer set to 190°C in a nitrogen atmosphere for 10 minutes and discharged. The temperature at the time of the end of the mixing was 185°C. A part of this rubber was sampled and the hydroxy TEMPO or peroxide residue not bonded with the rubber molecule was removed by dissolving the rubber in toluene, followed by dropwise added into methanol to be coagulated and recovered. This operation was carried out three times, then 1H-NMR measurement was carried out to calculate the grafted amount of hydroxy TEMPO. The rate of introduction of hydroxyl TEMPO was about 0.3 mol%.

This modified rubber was weighed to 310 g and mixed with acryloxypropyl trimethoxysilane (KBM-5103 made by Shin-Etsu Chemical) in 11.4 g in an internal mixer under a nitrogen atmosphere again at a temperature of about 160°C for reaction for about 15 minutes to obtain the desired modified rubber. This was purified in the same way as the above and measured by infrared spectrometry (ATR method) whereby it was confirmed that acryloxypropyl trimethoxysilane was grafted.

### Confirmation of Grafting of Acryl-Based Monomer and Methacryl-Based Monomer to Rubber by Infrared Spectrometry (ATR Method)

The purified rubber was measured using an ATR attachment by FT-IR (Fourier transformed infrared spectrometry). The presence of grafting was confirmed by the presence of absorption derived from the elastic vibration of the C=O bonds of the carbonyl groups of the acryl-based monomer or methacryl-based monomer appearing at 1620 cm⁻¹. Note that for rubber to which these monomers were not added (not graft reacted), absorption was not observed at 1620 cm⁻¹.

### Production Example 9: Production of NHK-10F

Natural rubber (STR20) in 350 g, the hydroxy TEMPO in 8.86 g and the di(2-t-butyl peroxyisopropyl)benzene in 0.1065 g were mixed in a 600 cc internal mixer set to 60°C for 5 minutes to be dispersed (premixing). This premixed rubber was mixed in an internal mixer set to 190°C in a nitrogen atmosphere for 10 minutes and discharged. The temperature at the time of the end of the mixing was 185°C. A part of this rubber was sampled and the hydroxy TEMPO or peroxide residue not bonded with the rubber molecule was removed by dissolving the rubber in toluene, followed by dropwise added into methanol to be coagulated and recovered. This operation was carried out three times, then 1H-NMR measurement was carried out to calculate the grafted amount of hydroxy TEMPO. The rate of introduction of hydroxyl TEMPO was about 0.3 mol%.

This modified rubber was weighed to 310 g and was mixed with the methacryloxypropyl trimethoxysilane (KBM-503 made by Shin-Etsu Chemical) in 12.1 g in an internal mixer under a nitrogen atmosphere again at a temperature of about 160°C for reaction for about 15 minutes to obtain the desired modified rubber. This was purified in the same way as the above and measured by infrared spectrometry (ATR method) whereby it was confirmed that the methacryloxypropyl trimethoxysilane was grafted.

### Production Example 10: Production of NHK-11F

Natural rubber (STR20) in 350 g, the hydroxyl TEMPO in 8.86 g and the di(2-t-butylperoxyisopropyl)benzene in 0.1065 g were mixed in a 600 cc internal mixer set to 60°C for 5 minutes to be dispersed (premixing). This premixed rubber was mixed in an internal mixer set to 190°C in a nitrogen atmosphere for 10 minutes and discharged. The temperature at the time of the end of the mixing was 185°C. A part of this rubber was sampled and the hydroxy TEMPO or peroxide residue not bonded with the rubber molecule was removed by dissolving the rubber in toluene, followed by dropwise added into methanol to be coagulated and recovered. This operation was carried out three times, then 1H-NMR measurement was carried out to calculate the grafted amount of hydroxy TEMPO. The rate of introduction of hydroxyl TEMPO was about 0.3 mol%.

This modified rubber was weighed to 310 g and was mixed with methacryloxypropyl triethoxysilane in 14.1 g in an internal mixer under a nitrogen atmosphere again at a temperature of about 160°C for reaction for about 15 minutes to obtain the desired modified rubber. This was purified in the same way as the above and measured by infrared spectrometry (ATR method), whereby it was confirmed that the methacryloxypropyl triethoxysilane was grafted.

### Production Example 11: Production of NHK-12F

Natural rubber (STR20) in 350 g, the hydroxy TEMPO in 8.86 g and the di(2-t-butyl peroxyisopropyl)benzene in 0.1065 g were mixed in a 600 cc internal mixer set to 60°C for 5 minutes to be dispersed (premixing). This premixed rubber was mixed in an internal mixer set to 190°C in a nitrogen atmosphere for 10 minutes and discharged. The temperature at the time of the end of the mixing was 185°C. A part of this rubber was sampled and the hydroxy TEMPO or peroxide residue not bonded with the rubber molecule was removed by dissolving the rubber in toluene, followed by dropwise added into methanol to be coagulated and recovered. This operation was carried out three times, then 1H-NMR measurement was carried out to calculate the grafted amount of hydroxy TEMPO. The rate of introduction of hydroxyl TEMPO was about 0.3 mol%.

This modified rubber was weighed to 310 g and mixed with methacrylic acid in 4.18 g in an internal mixer under a nitrogen atmosphere again at a temperature of about 160°C for reaction for about 15 minutes to obtain the desired modified rubber. This was purified in the same way as the above and measured by infrared spectrometry (ATR method) whereby it was confirmed that the methacrylic acid was grafted. However, the grafted amount was smaller compared with NHK-8F, 10F, and 11F.

### Production Example 12: Production of NHK-13F

Natural rubber (STR20) in 350 g, the hydroxy TEMPO in 8.86 g and the di(2-t-butyl peroxyisopropyl)benzene in 0.1065 g were mixed in a 600 cc internal mixer set to 60°C for 5 minutes to be dispersed (premixing). This premixed rubber was mixed in an internal mixer set to 190°C in a nitrogen atmosphere for 10 minutes and discharged. The temperature at the time of the end of the mixing was 185°C. A part of this rubber was sampled and the hydroxy TEMPO or peroxide residue not bonded to the rubber molecule was removed by dissolving the rubber in toluene, followed by dropwise added into methanol to be coagulated and recovered. This operation was carried out three times, then 1H-NMR measurement was carried out to calculate the grafted amount of hydroxy TEMPO. The rate of introduction of hydroxyl TEMPO was about 0.3 mol%.

### Production Example 13: Production of NHK-14F

Natural rubber (STR-20) not modified by mixing with hydroxyl TEMPO was weighed in 310 g and mixed with the methacryloxypropyl trimethoxysilane in 12.1 g in an internal mixer under a nitrogen atmosphere again at a temperature of about 160°C for reaction for about 15 minutes to obtain the desired modified rubber. This was purified in the same way as the above and measured by infrared spectrometry (ATR method) whereby it was confirmed that methacrylic acid was grafted. However, the grafted amount was extremely small compared with NHK-8F, 10F, and 11F.

### Examples 8 to 10 and Comparative Examples 4 to 9 Preparation of Samples

In each of the formulations shown in Table III, the ingredients other than the vulcanization accelerator and sulfur were mixed in a 0.6 liter internal mixer set to a temperature of 120°C at a rotor speed of 50 rpm for 12 minutes. The batch was discharged when reaching 150°C, then the vulcanization accelerator and the sulfur were added thereto and the resultant mixture was mixed by an open roll to obtain a rubber composition.

Next, the rubber composition obtained was press vulcanized in a 15×15×0.2 cm mold and a Lambourn abrasion test mold at 160°C for 30 minutes to prepare a vulcanized rubber sheet and the above shown below test methods were used to measure the physical properties of the vulcanized rubber. The results are shown in Table IV. Note that the Lupke rebound elasticity was measured according to JIS K6255.

**Table III**

| | Comp. | Ex. 8 | Ex. 9 | Ex. 10 | Comp. | Comp. | Comp. | Comp. | Comp. |
|---|---|---|---|---|---|---|---|---|---|
| | Ex. 4 | | | | Ex. 5 | Ex. 6 | Ex. 7 | Ex. 8 | Ex. 9 |
| Formulation (parts by weight) | | | | | | | | | |
| Natural rubber ^{*1} | 100 | - | - | - | - | - | - | 100 | 100 |
| NHK-8F^{*2} | - | 100 | - | - | - | - | - | - | - |
| NHK-10F^{*2} | - | - | 100 | - | - | - | - | - | - |
| NHK-11F^{*2} | - | - | - | 100 | - | - | - | - | - |
| NHK-12F^{*2} | - | - | - | - | 100 | - | - | - | - |
| NHK-13F^{*2} | - | - | - | - | - | 100 | - | - | - |
| NHK-14F^{*2} | - | - | - | - | - | - | 100 | - | - |
| Methacryloxypropyl Trimethoxysilane^{*3} Acryloxypropyl | - | - | - | - | - | 3.9 | - | 3.9 | - |
| Trimethoxysilane^{*4} | - | - | - | - | - | - | - | - | 3.68 |
| Silica^{*5} | 70 | 70 | 70 | 70 | 70 | 70 | 70 | 70 | 70 |
| Zinc oxide^{*6} | 3 | 3 | 3 | 3 | 3 | 3 | 3 | 3 | 3 |
| Stearic acid^{*6} | 1 | 1 | 1 | 1 | 1 | 1 | 1 | 1 | 1 |
| Antioxidant 6PPD^{*6} | 2.4 | 2.4 | 2.4 | 2.4 | 2.4 | 2.4 | 2.4 | 2.4 | 2.4 |
| Paraffin wax^{*5} | 1 | 1 | 1 | 1 | 1 | 1 | 1 | 1 | 1 |
| Silane coupling agent TESPT^{*6} | 5.6 | 5.6 | 5.6 | 5.6 | 5.6 | 5.6 | 5.6 | 5.6 | 5.6 |
| Processing oil^{*6} | 11.47 | 11.47 | 11.47 | 11.47 | 11.47 | 11.47 | 11.47 | 11.47 | 11.47 |
| Sulfur^{*6} | 1.85 | 1.85 | 1.85 | 1.85 | 1.85 | 1.85 | 1.85 | 1.85 | 1.85 |
| Vulcanization accelerator CBS^{*6} | 2.3 | 2.3 | 2.3 | 2.3 | 2.3 | 2.3 | 2.3 | 2.3 | 2.3 |
| Vulcanization accelerator DPG^{*6} | 0.5 | 0.5 | 0.5 | 0.5 | 0.5 | 0.5 | 0.5 | 0.5 | 0.5 |

| | | | | | | | | | |
|---|---|---|---|---|---|---|---|---|---|
| *1: STR-20 Specified Thai Rubber 20 *2: See above Production Examples 8 to 13 *3: KBM-503 (made by Shin-Etsu Chemical Co., Ltd.) *4: KBM-5103 (made by Shin-Etsu Chemical Co., Ltd.) *5: See Notes of Table II *6: See Notes of Table I | | | | | | | | | |

**Table IV**

| | | Comp. Ex. 4 | Ex. 8 | Ex. 9 | Ex. 10 | Comp. Ex. 5 | Comp. Ex. 6 | Comp. Ex. 7 | Comp. Ex. 8 | Comp. Ex. 9 |
|---|---|---|---|---|---|---|---|---|---|---|
| Evaluated physical properties | | | | | | | | | | |
| Tensile test | | | | | | | | | | |
| Test temp. (room temp.) | M₁₀₀ [MPa] | 3.6 | 4.7 | 4.7 | 5.2 | 5.1 | 5.8 | 4.3 | 4.7 | 4.5 |
| Shape (JIS3) | M₃₀₀ [MPa] | 14.6 | 20.4 | 20.5 | 21.3 | 18.3 | 19.7 | 16.6 | 18.1 | 16.5 |
| Speed (500 mm/min) | M₂₀₀ [MPa] | 8.6 | 12.6 | 12.7 | 13.5 | 11.9 | 12.7 | 10.2 | 11.0 | 10.2 |
| | T_{B} [MPa] E_{B} [%] | 26.4 531 | 21.7 320 | 22.2 325 | 22.0 308 | 23.1 397 | 22.7 347 | 24.8 450 | 25.1 414 | 25.2 460 |

| Viscoelasticity test | | | | | | | | | | |
|---|---|---|---|---|---|---|---|---|---|---|
| Dynamic strain (2±%) Frequency (20Hz) Initial strain (2000µm) | Temp. [0°C] E' [MPa] | 16.92 | 15.44 | 13.54 | 16.3 | 22.45 | 23.98 | 18.03 | 20.71 | 22.06 |
| | E" [MPa] | 5.38 | 4.64 | 3.99 | 5.07 | 7.41 | 8.48 | 5.93 | 6.78 | 7.21 |
| | tan δ | 0.318 | 0.301 | 0.295 | 0.311 | 0.330 | 0.354 | 0.329 | 0.327 | 0.327 |
| | Temp. [20°C] | | | | | | | | | |
| | E' [MPa] | 12.73 | 11.16 | 9.64 | 11.49 | 16.14 | 16.96 | 12.82 | 15.15 | 16.58 |
| | E" [MPa] | 3.41 | 2.74 | 2.3 | 2.98 | 5.01 | 5.59 | 3.55 | 4.31 | 4.74 |
| | tan δ | 0.268 | 0.245 | 0.239 | 0.259 | 0.310 | 0.330 | 0.277 | 0.284 | 0.286 |
| | Temp. [60°C] | | | | | | | | | |
| | E' [MPa] | 8.85 | 7.37 | 6.66 | 7.75 | 9.89 | 10.37 | 8.53 | 9.95 | 10.73 |
| | E" [MPa] | 1.68 | 1.11 | 0.95 | 1.21 | 2.23 | 2.17 | 1.5 | 1.83 | 2.2 |
| | tan δ | 0.190 | 0.150 | 0.143 | 0.156 | 0.225 | 0.209 | 0.175 | 0.184 | 0.205 |

| Lupke rebound elasticity | | | | | | | | | | |
|---|---|---|---|---|---|---|---|---|---|---|
| Test temp. (0°C) | | 30 | 31 | 33 | 33 | 29 | 28 | 29 | 31 | 29 |
| Test temp. (20°C) | | 45 | 49 | 51 | 52 | 43 | 43 | 46 | 48 | 45 |
| Test temp. (60°C) | | 59 | 65 | 67 | 68 | 59 | 61 | 63 | 63 | 59 |
| Lambourn abrasion test | | | | | | | | | | |
| | Index | 100 | 116 | 111 | 108 | 102 | 81 | 91 | 93 | 92 |

### Production Example 14: Production SHK-1F

SBR 1502 (Nipol 1502: made by Nippon Zeon) in 350 g, the hydroxyl TEMPO in 10 g and the di(2-t-butylperoxyisopropyl) benzene in 0.1000 g were mixed in a 600 cc internal mixer set to 60°C for 5 minutes to be dispersed (premixing). This premixed rubber was mixed in an internal mixer set to 190°C in a nitrogen atmosphere for 10 minutes and discharged. The temperature at the time of the end of the mixing was 185°C.

This modified rubber was weighed to 310 g and mixed with the acryloxypropyl trimethoxysilane in 9.6 g in an internal mixer under a nitrogen atmosphere again at a temperature of about 160°C for reaction for about 15 minutes to obtain the desired modified rubber. This was purified in the same way as the above and measured by infrared spectrometry (ATR method) whereby it was confirmed that acryloxypropyl trimethoxysilane was grafted.

### Production Example 15: Production of SHK-2F

Natural rubber (STR20) 350 g, the hydroxyl TEMPO in 10 g and the di(2-t-butyl peroxyisopropyl)benzene in 0.1000 g were mixed in a 600 cc internal mixer set to 60°C for 5 minutes to be dispersed (premixing). This premixed rubber was mixed in an internal mixer set to 190°C in a nitrogen atmosphere for 10 minutes and discharged. The temperature at the time of the end of the mixing was 185°C.

This modified rubber was weighed to 310 g and mixed with methacryloxypropyl trimethoxysilane in 10.2 g in an internal mixer under a nitrogen atmosphere again at a temperature of about 160°C for reaction for about 15 minutes to obtain the desired modified rubber. This was purified in the same way as the above and measured by infrared spectrometry (ATR method) whereby it was confirmed that the methacryloxypropyl trimethoxysilane was grafted.

### Production Example 16: Production of SHK-5F

Natural rubber (STR20) in 350 g, the methacryloxypropyl trimethoxysilane in 10.2 g and the di(2-t-butylperoxyisopropyl) benzene in 0.1000 g were mixed in a 600 cc internal mixer set to 60°C for 5 minutes to be dispersed (premixing). This premixed rubber was mixed in an internal mixer set to 190°C in a nitrogen atmosphere for 10 minutes and discharged. The temperature at the time of the end of the mixing was 185°C.

This was purified in the same way as the above and measured by infrared spectrometry (ATR method) whereby it was confirmed that the methacryloxypropyl methoxysilane was grafted. Note that this modified rubber was vigorously gelated and could not be subsequently evaluated.

### Examples 11 to 12 and Comparative Example 10

### Preparation of Sample

In each of the formulations shown in Table V, the ingredients other than the vulcanization accelerator and the sulfur were mixed in a 0.6 liter internal mixer set to a temperature of 120°C at a rotor speed of 50 rpm for 12 minutes. The batch was discharged when reaching 150°C, then the vulcanization accelerator and sulfur were added thereto and the resultant mixture was mixed by an open roll to obtain a rubber composition.

Next, the rubber composition obtained was press vulcanized in a 15×15×0.2 cm mold and a Lambourn abrasion test mold at 160°C for 30 minutes to prepare a vulcanized rubber sheet and the above test methods were used to measured for physical properties of the vulcanized rubber. The results are shown in Table V.

**Table V**

| | | Comp. | Ex. 11 | Ex. 12 |
|---|---|---|---|---|
| | | Ex. 10 | | |
| Formulation (parts by weight) | | | | |
| SBR1502^{*1} | | 100 | - | - |
| SHK-1F^{*2} | | - | 100 | - |
| SHK-2F^{*2} | | - | - | 100 |
| Silica ^{*3} | | 50 | 50 | 50 |
| Zinc oxide^{*4} | | 3 | 3 | 3 |
| Stearic acid^{*4} | | 1 | 1 | 1 |
| Antioxidant 6PPD^{*4} | | 1 | 1 | 1 |
| Silane coupling agent TESPT^{*4} | | 4 | 4 | 4 |
| Sulfur^{*4} | | 2 | 2 | 2 |
| Vulcanization accelerator CBS^{*4} | | 2 | 2 | 2 |
| Vulcanization accelerator DPG ^{*4} | | 2 | 2 | 2 |

| Evaluated physical properties | | | | |
|---|---|---|---|---|
| Tensile test | | | | |
| Test temp. (room temp.) | M₁₀₀ [MPa] | 5.0 | 4.8 | 4.8 |
| Shape (JIS3) | M₃₀₀ [MPa] | 13.0 | 13.7 | 13.5 |
| Speed (500 mm/min) | T_{B} [MPa] | 19.3 | 19.9 | 19.5 |
| | E_{B} [%] | 262 | 270 | 273 |

| Viscoelasticity test | | | | |
|---|---|---|---|---|
| Dynamic strain (2±%) | Temp. [0°C] | | | |
| Frequency (20Hz) | E' [MPa] | 12.49 | 12.37 | 12.33 |
| Initial strain (2000µm) | E" [MPa] | 3.64 | 3.59 | 3.56 |
| | tan δ | 0.291 | 0.290 | 0.289 |
| | Temp. [60°C] | | | |
| | E' [MPa] | 8.48 | 8.31 | 8.32 |
| | E" [MPa] | 1.22 | 1.01 | 1.02 |
| | tan δ | 0.144 | 0.121 | 0.123 |

| Lupke rebound elasticity | | | | |
|---|---|---|---|---|
| Test temp. (0°C) | | 35 | 34 | 34 |
| Test temp. (60°C) | | 63 | 69 | 68 |
| Lambourn abrasion test | | | | |
| | Index | 100 | 122 | 117 |

| | | | | |
|---|---|---|---|---|
| *1: Nipol 1502 (made by Nippon Zeon) *2: See above Production Examples 15 to 16 *3: See Notes of Table II *4: See Notes of Table I | | | | |

### INDUSTRIAL APPLICABILITY

As explained above, according to the present invention, it is possible to introduce a desired functional group into a diene-based rubber, without causing the decrease in the molecular weight or gelation and without causing the formation of a homopolymer in the system, whereby a rubber composition superior in silica dispersibility, abrasion resistance, heat buildup resistance, etc. is obtained which is useful for tires and other various rubber products.

## Claims

1. A modified diene-based rubber obtained by adding, to a diene-based rubber (A), a compound (B) having, in the molecule thereof, a nitroxide free radical stable at an ordinary temperature and in the presence of oxygen, a radical initiator (C) and a radical polymerizable monomer (D) having a functional group in the molecule thereof, whereby the compound (B), the radical initiator (C) and the polymerizable monomer (D) are reacted to the diene-based rubber (A).

2. A modified diene-based rubber as claimed in claim 1, wherein the rubber is obtained by first adding, to the diene-based rubber (A), the components (B) and (C) to thereby react the components (B) and (C) to the rubber (A), then by adding the component (D) to thereby react the component (D) thereto.

3. A modified diene-based rubber as claimed in claim 1 or 2, wherein said radical initiator (C) is an organic peroxide.

4. A modified diene-based rubber as claimed in any one of claims 1 to 3, wherein said diene-based rubber (A) is a synthetic polyisoprene rubber, natural rubber, styrene-butadiene copolymer rubber and/or polybutadiene rubber.

5. A modified diene-based rubber as claimed in any one of claims 1 to 4, wherein said radical polymerizable monomer having a functional group in the molecule thereof is a monomer having an electron withdrawing group.

6. A modified diene-based rubber as claimed in any one of claims 1 to 5, wherein said radical polymerizable monomer having a functional group in the molecule thereof is an acrylate-based or methacrylate-based monomer.

7. A modified diene-based rubber as claimed in any one of claims 1 to 6, wherein said radical polymerizable monomer having a functional group in the molecule thereof is one having reactivity or affinity with the surface of silica particles.

8. A modified diene-based rubber as claimed in any one of claims 1 to 7, wherein said radical polymerizable monomer having a functional group in the molecule thereof is a monomer having an alkoxysilyl group.

9. A modified diene-based rubber as claimed in any one of claims 1 to 8, wherein the addition amount of said radical initiator (C), in terms of the molecules of decomposition-generated radical, is 0.0001 to 0.1 mol% based upon the diene-based rubber (A).

10. A modified diene-based rubber as claimed in any one of claims 1 to 9, wherein the modification reaction is carried out in a mixing device.

11. A rubber composition comprising, based upon 100 parts by weight of the total rubber components, 5 parts by weight or more of a modified diene-based rubber according to any one of claims 1 to 10 and further comprising 0.05 to 15 parts by weight of a cross-linking agent.

12. A rubber composition as claimed in claim 11, further comprising, based upon 100 parts by weight of the total rubber components, 5 to 300 parts by weight of a reinforcing filler.

13. A rubber composition as claimed in claim 12, wherein said reinforcing filler contains 10 to 100% by weight of silica.

14. A pneumatic tire using a rubber composition according to claim 12 or 13.

15. A pneumatic tire as claimed in claim 14 using said rubber composition as a cap tread portion.
